# EUROPEAN PATENT SPECIFICATION

(11) **EP 4 006 364 B1**
(45) Date of publication and mention of the grant of the patent: **09.08.2023**
(21) Application number: 21209411.4
(22) Date of filing: 19.11.2021
(51) Int. Cl.: F16B 31/06, F16B 19/00

(54) **STRUCTURAL FUSE**
STRUKTURELLE SICHERUNG
FUSIBLE STRUCTUREL

(30) Priority: 30.11.2020 GB 202018805
(43) Date of publication of application: 01.06.2022
(73) Proprietor: Airbus Operations Limited, Bristol BS34 7PA (GB)
(72) Inventor: WILSON, Fraser, Bristol, BS34 7PA (GB)
(74) Representative: Abel & Imray LLP

(56) References cited:
- EP-A2- 2 562 083
- CN-A- 104 802 984
- US-B2- 10 160 535

## Description

### FIELD OF TECHNOLOGY

This invention relates to a structural fuse, such as may be found on an aircraft or aircraft-supporting equipment. The invention further relates to a component of an aircraft, or of aircraft-supporting equipment, including such a structural fuse. The invention also relates to a method of making such a structural fuse.

### BACKGROUND

A structural fuse is a component intended to provide a point of failure at a predetermined load, in an effort to prevent damage to other components. Structural fuses can take many forms; when in the form of a pin they are also known as fuse pins, shear pins or breakaway pins. Structural fuses are typically employed in agricultural and industrial machinery, in power tools, in buildings and in vehicles, such as aircraft. A fuse pin is known from US 10 160 535 B2.

For example, a structural fuse in the form of a fuse pin typically forms part of the connection between an aircraft landing gear beam and the aircraft wing. If the aircraft has a particularly hard landing, or the landing gear impacts an object, the fuse pin is configured to shear if the load it experiences is at or above a predetermined value. The shearing of the fuse pin may dissipate energy and prevent other components from being damaged due to the hard landing and/or impact. For example, the shearing of the fuse pin may help to prevent damage to the fuel tanks on the wing of the aircraft.

A landing gear fuse pin typically has a main body in the form of a metal cylinder, with the cross section of the internal bore being designed so that the fuse pin breaks at a predetermined load and, preferably, at a predetermined location on the pin.

The cyclic loading experienced by a fuse pin in use can result in fatigue cracks and, consequently, an undesired failure of the pin. Thus, a fuse pin may have a relatively short operational life. It has been proposed to reduce fatigue failures by increasing the size of the pin. However, a problem which may be encountered with this approach is that the components that the fuse pin attaches to need to be strengthened accordingly, as do the parts that those components attach to, and so on. This snowball effect can result in considerable excess weight being added to the aircraft.

### BRIEF SUMMARY OF THE TECHNOLOGY

The invention provides a structural fuse according to claim 1 configured to shear upon an application of a predetermined load and having a longitudinal axis, the fuse comprising a plurality of reinforcing elements in a metal matrix. The provision of such a so-called metal matrix composite results in a fuse having improved fatigue properties and hence a longer operating life.

The reinforcing elements may be elongate reinforcing elements. Such an elongate reinforcing element may have a longitudinal axis of its own. Advantageously, at least some of the elongate reinforcing elements are arranged substantially parallel to the longitudinal axis of the structural fuse, so that the fuse is stronger along its longitudinal axis but not heavier than a conventional fuse.

At least some of the reinforcing elements may be arranged transverse to the longitudinal axis, for example in a helical formation. At least some of the elongate reinforcing elements may be arranged substantially perpendicular to the longitudinal axis, for example as hoops. The load (or range of loads) at which the fuse is arranged to shear can be engineered by careful arrangement of the orientation of the reinforcing elements, and by selecting the proportion of fibres in the matrix. Thus, a fuse having a narrower load range than hitherto achievable can be produced.

Preferably, at least a portion of the metal matrix may comprise a plurality of hollow metal ceramic spheres. This results in a foam-like material that can absorb higher loads than a solid metal fuse.

The matrix material may comprise a selection of, or a combination of, the following: aluminium; titanium; steel, copper; nickel; any alloy of the aforementioned metals; and metal ceramics material.

The reinforcing elements may include ceramic fibres, such as aluminium oxide fibre or silicon carbide fibre. Carbon fibres may also be employed.

A structural fuse constructed according to the invention may take the form of a fuse pin. The pin may have an internal bore along at least part of the longitudinal axis. The bore may have a predetermined profile so that it shears at a predetermined location.

The invention also provides an aircraft component, such as a landing gear assembly including such a structural fuse, and an aircraft including such a component.

The invention further provides aircraft supporting equipment including such a structural fuse. The aircraft supporting equipment may form at least a part of a vehicle or other apparatus or device that provides services, maintenance or support to an aircraft in a manner which might involve the transmission of forces between the aircraft supporting equipment and the aircraft. The provision of a structural fuse may reduce the risk of a sudden impulse being transmitted from the aircraft supporting equipment to (and potentially causing damage to) a key component of the aircraft. The aircraft supporting equipment may be a tow bar of an airport vehicle, for example. The aircraft supporting equipment may be refuelling equipment for an aircraft. The invention may have application in relation to other types of aircraft supporting equipment.

A further aspect of the invention provides a method of manufacturing such a structural fuse according to claim 15, comprising the steps of arranging elongate reinforcing elements in a predetermined configuration; introducing a matrix material around the reinforcing elements such that the matrix material at least partially surrounds the reinforcing elements; and solidifying the matrix material.

The first step of this method advantageously comprises arranging the elongate reinforcing elements as a predetermined fraction of the fuse and in predetermined orientations. Thus, the load band or range of load values at which shearing of the fuse occurs can be more precisely engineered and made narrower if desired.

The first step may also include arranging a plurality of metal ceramic spheres in a predetermined configuration. The spheres may be vibrated to distribute them.

### BRIEF DESCRIPTION OF THE DRAWINGS

The invention will now be described, by way of example, with reference to the accompanying drawings in which:
Figure 1 is a side sectional view through a structural fuse constructed according to the invention;
Figure 2 is a side sectional view of a structural fuse constructed according to an alternative embodiment of the invention;
Figure 3 is a side sectional view of a structural fuse constructed according to another alternative embodiment of the invention;
Figure 4 is a side sectional view of a structural fuse constructed according to a further alternative embodiment of the invention;
Figure 5 is a schematic diagram of a process for manufacturing any of the structural fuses of Figures 1-4;
Figure 6a is a perspective view showing a structural fuse constructed according to the invention in part of an aircraft landing gear assembly; and
Figure 6b is an enlarged drawing of part of the assembly of Figure 6a.

Like reference numerals refer to like parts throughout the specification.

### DETAILED DESCRIPTION OF EMBODIMENTS OF THE TECHNOLOGY

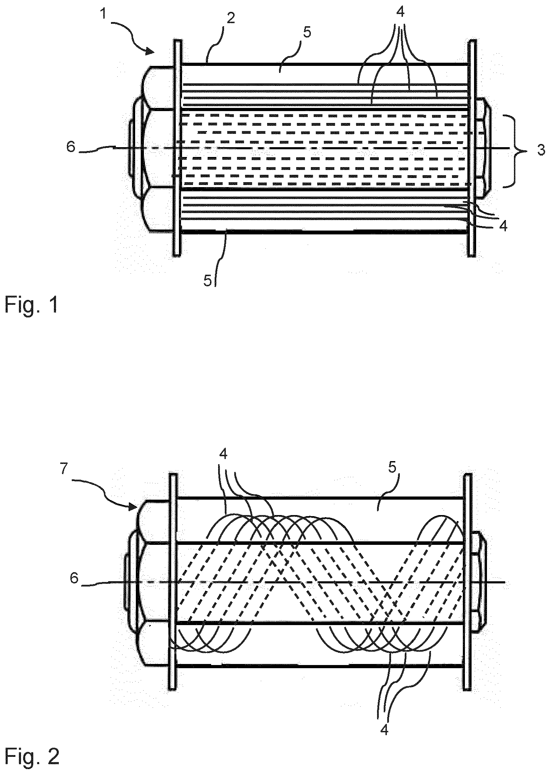

A structural fuse in the form of a fuse pin constructed according to the invention is shown schematically in Figure 1 and indicated generally by the reference numeral 1. The pin 1 comprises a generally cylindrical main body 2 having a hollow interior region 3. In this drawing, the cylindrical main body 2 is shown as having a simple, straight-sided interior wall for simplicity. In practice, the interior surface of the cylindrical main body 2 may be arranged to have a predetermined profile, so that the hollow region 3 is larger in some areas than others. Thus, the location of shear in the fuse pin 1 can be engineered as required. In accordance with the invention, the fuse pin 1 comprises a plurality of elongate reinforcing elements 4 in the form of long fibres, embedded in a metal matrix 5. In this embodiment, the reinforcing elements 4 extend axially along the fuse pin: the pin has a longitudinal axis 6 and the reinforcing elements are arranged substantially parallel to that axis.

In these drawings, only a few reinforcing elements are shown for clarity. The number of reinforcing elements employed will typically be greater than is shown here.

An "elongate" element is any structure having one dimension that is significantly longer than any other dimension. For example wires, fibres, tapes, threads and the like are all considered to be elongate elements. The elongate elements may each be elongate in a direction aligned with its own longitudinal axis, and thus referred to as longitudinal reinforcing elements.

The elongate reinforcing elements 4 may comprise, for example, ceramic fibres such as aluminium oxide fibres or silicon carbide fibres. The matrix material 5 is a metallic material, such as aluminium, titanium, or any other suitable metallic material. It is anticipated that the volume of matrix material 5 will be significantly larger than the volume of reinforcing elements 4 in the fuse pin 1, so the overall cost, weight and machinability of the component is largely determined by the choice of matrix material.

It has been found that such a metal matrix composite material has improved fatigue properties. Thus, the fuse pin 1 manufactured of this material has a significantly improved operational life, which can be achieved without adding to the weight of the pin. In fact, the pin 1 can be made lighter in weight than a conventional fuse pin, which is typically of steel. Thus, employing the fuse pin 1 results in no additional weight having to be added to the supporting components of the aircraft, with consequent fuel savings and reduced emissions.

It should be noted that the shearing load and/or shearing location of a fuse pin constructed according to the invention can be tailored or tuned in a variety of ways, some of which are discussed below. The key to success in producing a structural fuse is the close setting of a narrow load band in which rupture of the fuse can be guaranteed. The strength of a structural fuse constructed according to the invention is a function of both the fibre fraction and fibre orientation, and the setting of the load band can be achieved more accurately than was possible hitherto. Thus, the invention allows for structural fuses to be made for a wide variety of applications and working environments.

For example, Figure 2 shows an alternative fuse pin 7 constructed according to the invention. In this example, the fuse pin 7 comprises a plurality of elongate reinforcing elements in the form of long fibres 4 in a metal matrix 5 as before. However, the direction of the fibres 4 is transverse to the longitudinal axis 6 of the pin. In this embodiment, the fibres 4 are at an angle of approximately 45° to the axis 6; the fibres 4 form a helical winding along the fuse pin 5. Such a helicoidal arrangement of fibres makes for a greater compressive strength and shear resistance of the fuse pin 7.

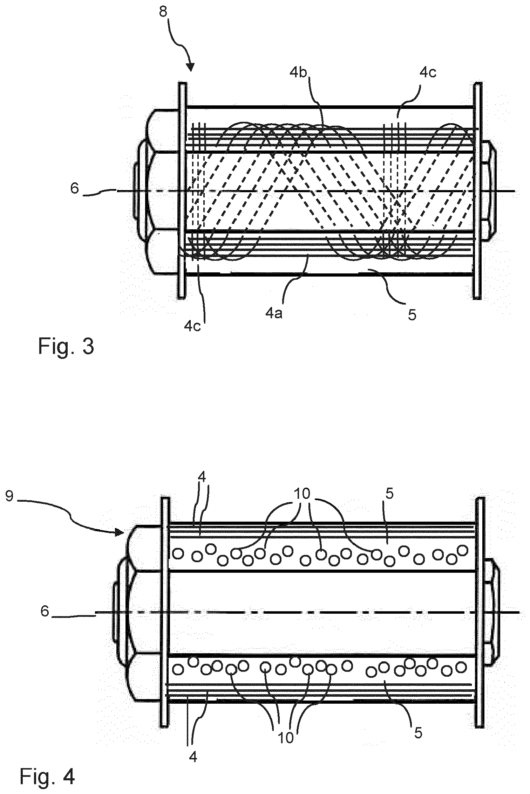

In the alternative fuse pin 8 of Figure 3, a first portion 4a of the fibres 4 are aligned with the longitudinal axis 6 of the pin. A second portion 4b of the fibres are helically wound, so as to form an angle of around 45° to the axis 4. A third portion 4c of the fibres 4 is arranged at a normal to the longitudinal axis 6 i.e. the fibres form hoops around the axis. Such an arrangement is suitable for fuse pins arranged to shear at relatively high loads. The hoop portions 4c of the fibres 4 may be arranged in regions of the fuse pin 8 requiring greater reinforcement i.e. at locations that are not intended to shear on application of a load.

Thus, the shearing threshold, location of shear and direction of shearing load of the fuse pin can be tailored by employing different orientations of fibres in the pin. The diameter of the fibres, the material of the fibres and the proportion of fibres in the matrix all influence the shearing properties of the pin.

Different regions of the pin may have fibres of different size, material and fibre fraction in the matrix, in dependence on the desired properties of the pin. In an application where the pin is arranged to shear at a relatively low load, the desired point of shear in the pin may be arranged to have a low density of reinforcing elements 4, or no reinforcing elements at all.

The properties of the fuse pin may also be tailored for the application of the pin by adjusting the properties of the metal matrix. For example, the material of the matrix may be chosen to best suit the operating environment of the pin, or different materials may form the matrix in different regions of the pin.

Another way in which the properties of the pin may be adjusted is shown in Figure 4. In this embodiment, the fuse pin 9 comprises a plurality of long fibre reinforcing elements 4 in a metal matrix 5, as before. In this embodiment a region of the metal matrix 5 includes a plurality of hollow metal ceramic spheres 10. The combination of spheres 10 in the metal matrix 5 forms a foam-like arrangement that can absorb large amounts of impact energy by its sacrificial collapse through buckling and cracking of the spheres. The fuse pin 9 can thus absorb higher levels of energy than a conventional purely metal fuse pin. The fuse pin 9 has good strength, under both tension and compression, reduced thermal conductivity and is lighter in weight than a conventional pin.

In this drawing, the spheres 10 are shown as being distributed evenly along the longitudinal axis 6, but of course the spheres may be arranged to form different fractions of the metal matrix in different regions of the pin, in dependence on the desired location of shear and shearing load. The spheres 10 may be of any diameter in the range of micrometres to millimetres. They may all be of substantially the same diameter or a selection of a range of diameters. The spheres 10 may be of one material, such as alumina or silica carbide, or a plurality of different materials in the same composition. The spheres 10 may be coated to enable easier integration with the metal matrix.

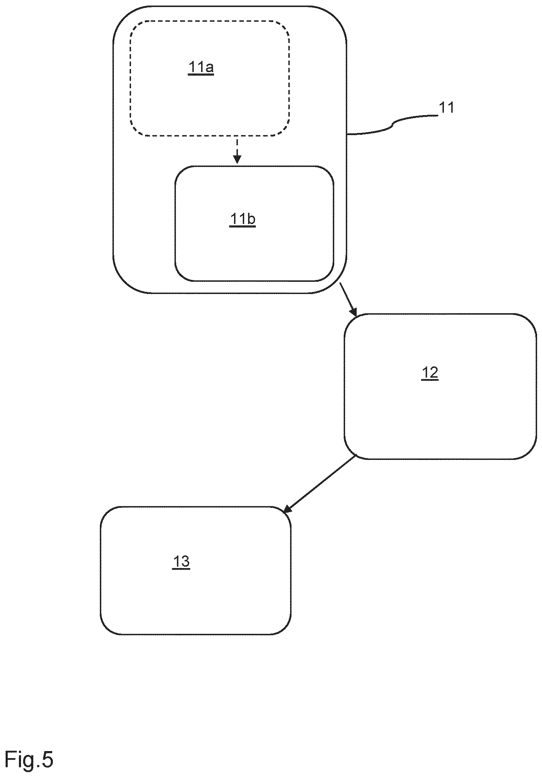

Figure 5 is a flow chart illustrating an example method of manufacturing a structural fuse constructed according to the invention. Such a structural fuse may be, for example, any of the example fuse pins discussed above. Optional steps i.e. steps which apply only to certain embodiments of the invention, are shown in broken lines.

In one embodiment of a casting method according to the invention, the first step 11 comprises "laying up" of the reinforcing elongate elements and, where used, the hollow metal ceramic spheres. Firstly, the spheres 10 are placed inside the mould (optional step 11a). The hollow spheres may be arranged inside the mould, such as through vibrating, to pack the spheres into a best attainable close-packed density. Once the spheres are packed in the mould, the elongate reinforcing elements 4 are added to the mould (step 11b). This may be done by simply laying fibres within the mould, or else by winding fibres around one of more support structures, which may be formed in the casting mould itself. The fibres may be conveniently embedded in a fabric or tape that can simply be laid on, or wound around, a mandrel. A bundle of elongate elements may be simultaneously wound around a mandrel to form a plurality of loops. Alternatively, a single elongate element may be wound multiple times until a desired number of loops is formed. A plurality of elongate elements may be pre-woven or braided into an interlinked arrangement before being arranged on the mandrel. The laying of the elongate elements may be performed manually, or using an automated tool. Any technique known for arranging fibres in the manufacturing of carbon fibre reinforced plastic (CFRP) components may be used to arrange the elongate elements 4.

The next step 12 in the manufacturing process is that of introducing the metal matrix material 5. One way in which this can be done is by pouring liquid metal into the mould. In this embodiment, the mould incorporating the spheres and reinforcing material is first preheated. Preferably, the pre-heat temperature is approximately equal to the casting temperature of the matrix-forming liquid metal in order to prevent premature solidification of the matrix before complete filling of the mould.

The matrix-forming liquid metal is cast into the mould in such a manner as to fill the voids around the hollow spheres 10 and reinforcing elements 4 while avoiding disturbance of the spheres and reinforcing elements within the mould. In some embodiments, it may be useful to use screens, pegs, wax binders or other similar means, for maintaining the arrangement of the spheres and reinforcing elements within the mould. In addition to gravity casting, the mould may be subject to pressure differentials during the cast process. For example, the mould may be pressurised or held under vacuum.

Once the matrix-forming liquid metal has been satisfactorily cast into the mould, the liquid metal is solidified (step 13) to form a solid metal matrix around the hollow spheres 10 and reinforcing elements 4. Such solidification is generally through cooling of the mould, which can be through atmospheric cooling or through more controlled cooling methods.

In other examples, an additive manufacturing process may be used to arrange the matrix material on the reinforcing member. In such examples a mould is not required. Instead the matrix material is built up layer wise around and on the reinforcing elements (and optionally the metal ceramic spheres), according to a predetermined design corresponding to the desired shape of the component. Any suitable additive manufacturing process known in the art could be used, depending on the type of the matrix material. An additive manufacturing process used to arrange the matrix material on the reinforcing member would be tailored such that the arrangement of the reinforcing elements and/or metal ceramic spheres is not disturbed (either physically or chemically) during deposition of the matrix material. Various alternative techniques could also be used to introduce the matrix material including (but not limited to) electron beam deposition, laser deposition, and hot isostatic pressing (HIP).

The fuse pin may be formed by other suitable processes known to the skilled person, such as powder metallurgy, squeeze casting or diffusion bonding.

In the case where it is desired for the internal surface of the pin to have a predetermined profile, this can be done at the casting stage by, for example, using a mandrel having a desired profile. Alternatively, the profile can be machined into the pin after the solidification step described above.

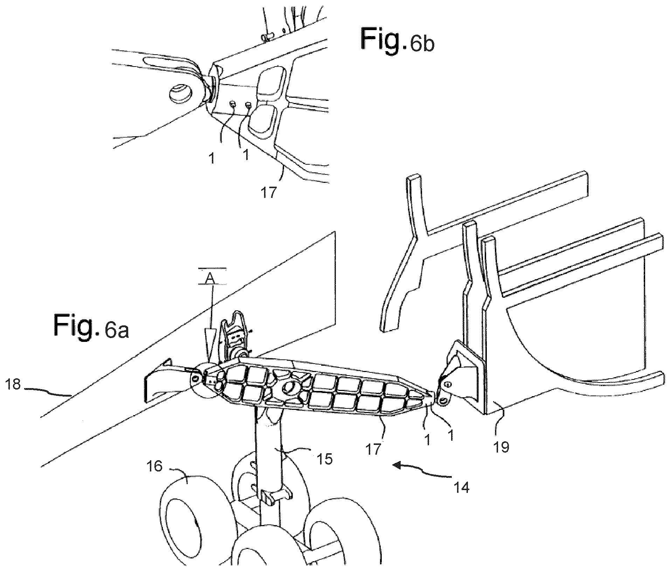

Figures 6a and 6b show a fuse pin constructed according to the invention in part of a main landing gear assembly 14 of an aircraft. Figure 6b is an enlarged view of the region marked A in Figure 6a. The fuse pin 1 constructed according to the first embodiment is shown, but any of the fuse pins 7, 8, 9 or any other alternative embodiment may be employed. Some of the components of the landing gear assembly are not shown in this drawing for clarity.

The main landing gear assembly 14 comprises an oleo strut 15 having a wheel assembly 16 at one end. At the other end of the oleo strut 15 is a landing gear beam 17. One end of the landing gear beam 17 is connected to the rear spar 18 of a wing. As shown in Figure 7b, the connection between the landing gear beam 17 and the spar 18 includes two fuse pins 1 constructed according to the invention. A further pair of fuse pins 1 is provided in the connection between the other end of the landing gear beam 17 and the aircraft fuselage 19. The fuse pins 1 prevent rotation of the gear beam 17 in normal operating conditions. Upon the application of an excessive rearward force to the oleo strut 15, possibly by the wheel assembly 16 striking an object during take-off or landing, the strut will be urged to rotate about the longitudinal axis of the gear beam 17 whereupon the fuse pins 1 will shear to allow rotation to take place for safe disengagement of the landing gear from the beam, without damage to the spar 18 and consequently the wing.

A fuse pin constructed according to the invention may also be employed in other aircraft assemblies, such as on the connection between an aircraft engine and its pylon, and/or between the pylon and a wing. The structural fuse on an aircraft may also take the form of a lug, strut or brace.

A structural fuse constructed according to the invention may also be employed in aircraft-supporting equipment. For example, a structural fuse in the form of a fuse pin may form part of a tow bar connection used by ground vehicles to move an aircraft around the airport. If the aircraft hits an obstacle during towing, the fuse pin ruptures to prevent damage to the aircraft. In this application, the fuse pin may be of a solid metal matrix composite material, without the hollow interior region.

Structural fuses constructed according to the invention may also be employed in a wide variety of environments and applications. For example, a fuse pin may form part of the attachment between a drive and a gearbox in industrial or agricultural machinery. A fuse pin may be employed in ships, in the connection between a propeller and a marine engine, in order to protect the engine if the propeller strikes an underwater object. In construction, certain regions of a building or bridge may be designed with structural fuses in the form of beams that are arranged to buckle and fail in a controlled way and hence dissipate energy during a high-intensity seismic event. Further uses of the invention will be apparent to the person skilled in the art.

Other fibres suitable for use in a structural fuse constructed according to the invention include galvanic-coated carbon fibres, basalt fibres, boron fibres, basalt fibres, or any other high strength fibres. Other suitable matrix materials include alloys of titanium, aluminium, steel, copper and nickel, and metal ceramics materials.

## Claims

1. A structural fuse configured to shear upon an application of a predetermined load and having a longitudinal axis (6), **characterized in that** the fuse comprises a plurality of elongate reinforcing elements (4) in a metal matrix (5).

2. A structural fuse as claimed in claim 1, in which at least some of the reinforcing elements (4) are arranged substantially parallel to the longitudinal axis (6).

3. A structural fuse as claimed in claim 1 or 2, in which at least some of the reinforcing elements (4) are arranged transverse to the longitudinal axis (6).

4. A structural fuse as claimed in any one of claims 1, 2 or 3, in which at least some of the elongate reinforcing elements (4) are arranged substantially perpendicular to the longitudinal axis (6).

5. A structural fuse as claimed in any previous claim, in which at least a portion of the metal matrix (5) comprises a plurality of hollow metal ceramic spheres (10).

6. A structural fuse as claimed in any preceding claim, wherein the matrix material comprises a selection of aluminium; titanium; steel, copper; nickel; any alloy of the aforementioned metals; and metal ceramics material.

7. A structural fuse as claimed in any preceding claim, wherein the reinforcing elements (4) include ceramic fibres.

8. A structural fuse as claimed in claim 7, wherein the ceramic fibres comprise aluminium oxide fibre or silicon carbide fibre.

9. A structural fuse as claimed in any preceding claim, wherein the reinforcing elements include carbon fibres.

10. A structural fuse as claimed in any preceding claim in the form of a fuse pin (1,7,8,9).

11. A structural fuse as claimed in claim 10, in which the pin (1,7,8,9) has an internal bore along the longitudinal axis having a predetermined profile.

12. An aircraft component including a structural fuse as claimed in any preceding claim.

13. An aircraft including a component as claimed in claim 12.

14. Aircraft supporting equipment including a structural fuse as claimed in any one of claims 1 to 11.

15. A method of manufacturing a structural fuse as claimed in any one of claims 1 to 11, the method comprising the steps of arranging elongate reinforcing elements (4) in a predetermined configuration; introducing a matrix material (5) around the reinforcing elements (4) such that the matrix material (5) at least partially surrounds the reinforcing elements (4); and solidifying the matrix material (5).

16. A method as claimed in claim 15, in which the first step comprises arranging the elongate reinforcing elements (4) as a predetermined fraction of the fuse and in predetermined orientations.

17. A method of manufacturing a structural fuse as claimed in claim 15 or 16, in which the first step also includes arranging a plurality of metal ceramic spheres (10) in a predetermined configuration.

18. A method as claimed in claim 17, further comprising the step of vibrating the spheres (10) to distribute them.

## Patentansprüche

1. Strukturelle Sicherung, die konfiguriert ist, um bei einer Anwendung einer vorbestimmten Last abzuscheren, und die eine Längsachse (6) aufweist, **dadurch gekennzeichnet, dass** die Sicherung eine Vielzahl von länglichen Verstärkungselementen (4) in einer Metallmatrix (5) umfasst.

2. Strukturelle Sicherung wie in Anspruch 1 beansprucht, wobei mindestens einige der Verstärkungselemente (4) im Wesentlichen parallel zur Längsachse (6) angeordnet sind.

3. Strukturelle Sicherung wie in Anspruch 1 oder 2 beansprucht, wobei mindestens einige der Verstärkungselemente (4) quer zur Längsachse (6) angeordnet ist.

4. Strukturelle Sicherung wie in einem der Ansprüche 1, 2 oder 3 beansprucht, wobei mindestens einige der länglichen Verstärkungselemente (4) im Wesentlichen senkrecht zur Längsachse (6) angeordnet sind.

5. Strukturelle Sicherung wie in einem der vorhergehenden Ansprüche beansprucht, wobei mindestens ein Abschnitt der Metallmatrix (5) eine Vielzahl von hohlen metallkeramischen Kugeln (10) umfasst.

6. Strukturelle Sicherung wie in einem der vorhergehenden Ansprüche beansprucht, wobei das Matrixmaterial eine Auswahl umfasst aus: Aluminium; Titan; Stahl; Kupfer; Nickel; einer beliebigen Legierung der vorgenannten Metalle; und metallkeramischem Material.

7. Strukturelle Sicherung wie in einem der vorhergehenden Ansprüche beansprucht, wobei die Verstärkungselemente (4) Keramikfasern enthalten.

8. Strukturelle Sicherung wie in Anspruch 7 beansprucht, wobei die Keramikfasern Aluminiumoxidfasern oder Siliciumcarbidfasern umfassen.

9. Strukturelle Sicherung wie in einem der vorhergehenden Ansprüche beansprucht, wobei die Verstärkungselemente Kohlenstofffasern enthalten.

10. Strukturelle Sicherung wie in einem der vorhergehenden Ansprüche beansprucht in Form eines Sicherungsstifts (1, 7, 8, 9).

11. Strukturelle Sicherung wie in Anspruch 10 beansprucht, wobei der Stift (1, 7, 8, 9) eine Innenbohrung entlang der Längsachse aufweist, die ein vorbestimmtes Profil aufweist.

12. Flugzeugkomponente, die eine strukturelle Sicherung, wie in einem der vorhergehenden Ansprüche beansprucht, enthält.

13. Flugzeug, das eine Komponente, wie in Anspruch 12 beansprucht, enthält.

14. Flugzeugunterstützungsausrüstung, die eine strukturelle Sicherung, wie in einem der Ansprüche 1 bis 11 beansprucht, enthält.

15. Verfahren zur Herstellung einer strukturellen Sicherung, wie in einem der Ansprüche 1 bis 11 beansprucht, wobei das Verfahren die Schritte umfasst: Anordnen von länglichen Verstärkungselementen (4) in einer vorbestimmten Konfiguration; Einbringen eines Matrixmaterials (5) um die Verstärkungselemente (4) herum, so dass das Matrixmaterial (5) die Verstärkungselemente (4) zumindest teilweise umgibt; und Verfestigen des Matrixmaterials (5).

16. Verfahren wie in Anspruch 15 beansprucht, wobei der erste Schritt das Anordnen von länglichen Verstärkungselemente (4) als ein vorbestimmter Anteil der Sicherung und in vorbestimmten Ausrichtungen umfasst.

17. Verfahren zur Herstellung einer strukturellen Sicherung wie in Anspruch 15 oder 16 beansprucht, bei dem der erste Schritt auch das Anordnen einer Vielzahl von Metallkeramikkugeln (10) in einer vorbestimmten Konfiguration umfasst.

18. Verfahren wie in Anspruch 17 beansprucht, ferner umfassen den Schritt des Vibrierens der Kugeln, um sie zu verteilen.

## Revendications

1. Fusible structurel configuré pour cisailler sur application d'une charge prédéterminée et ayant un axe longitudinal (6), **caractérisé en ce que** le fusible comprend plusieurs éléments de renforcement allongés (4) dans une matrice métallique (5).

2. Fusible structurel suivant la revendication 1, dans lequel au moins quelques-uns des éléments de renforcement (4) sont disposés sensiblement parallèlement à l'axe longitudinal (6).

3. Fusible structurel suivant la revendication 1 ou 2, dans lequel au moins quelques-uns des éléments de renforcement (4) sont disposés transversalement à l'axe longitudinal (6).

4. Fusible structurel suivant la revendication 1, 2 ou 3 dans lequel au moins quelques-uns des éléments de renforcement (4) sont disposés sensiblement perpendiculairement à l'axe longitudinal (6).

5. Fusible structurel suivant une des revendications précédentes, dans lequel au moins une partie de la matrice métallique (5) comprend plusieurs sphères creuses en céramique métallique (10).

6. Fusible structurel suivant une des revendications précédentes, dans lequel le matériau de la matrice comprend une sélection d'aluminium, de titanium, d'acier, de cuivre, de nickel, tout alliage des métaux mentionnés ci-avant et un matériau en céramique métallique.

7. Fusible structurel suivant une des revendications précédentes, dans lequel les éléments de renforcement incluent des fibres céramiques.

8. Fusible structurel suivant la revendication 7, dans lequel les fibres céramiques comprennent des fibres en oxyde d'aluminium ou des fibres en carbure de silicium.

9. Fusible structurel suivant une des revendications précédentes, dans lequel les éléments de renforcement incluent des fibres de carbone.

10. Fusible structurel suivant une des revendications précédentes sous la forme d'une goupille de sûreté (1,7,8,9).

11. Fusible structurel suivant la revendication 10, dans lequel la goupille (1,7,8,9) présente un alésage interne le long de l'axe longitudinal ayant un profil prédéterminé.

12. Composant d'aéronef incluant un fusible structurel suivant une des revendications précédentes.

13. Aéronef incluant un composant suivant la revendication 12.

14. Equipement d'appui d'aéronef incluant un fusible structurel suivant une des revendications 1 à 11.

15. Procédé de fabrication d'un fusible structurel suivant une des revendications 1 à 11, ledit procédé comprenant les étapes consistant à :
disposer les éléments de renforcement allongés (4) selon une configuration prédéterm inée,
introduire un matériau de matrice (5) autour des éléments de renforcement (4) de sorte que le matériau de la matrice (5) entoure au moins partiellement les éléments de renforcement (4), et
solidifier le matériau de la matrice (5).

16. Procédé suivant la revendication 15, dans lequel la première étape comprend la disposition des éléments de renforcement allongés (4) en tant que fraction prédéterminée du fusible et dans des orientations prédéterminées.

17. Procédé de fabrication d'un fusible structurel suivant la revendication 15 ou 16, dans lequel la première étape inclut également la disposition de plusieurs sphères en céramique métallique (10) selon une configuration prédéterminée.

18. Procédé suivant la revendication 17, ledit procédé comprenant l'étape consistant à faire vibrer les sphères (10) pour les distribuer.
